# EUROPEAN PATENT SPECIFICATION

(11) **EP 3 433 033 B1**
(45) Date of publication and mention of the grant of the patent: **01.04.2020**
(21) Application number: 17714560.4
(22) Date of filing: 15.03.2017
(51) Int. Cl.: B08B 7/00, B65G 45/10

(54) **CONVEYOR WITH AUTOMATIC CLEANING SYSTEM FOR GLUE DISTRIBUTING APPARATUSES**
FÖRDERER MIT AUTOMATISCHEM REINIGUNGSSYSTEM FÜR KLEBSTOFFVERTEILER
TRANSPORTEUR AVEC SYSTÈME DE NETTOYAGE AUTOMATIQUE POUR APPAREILS DE DISTRIBUTION DE COLLE

(30) Priority: 21.03.2016 IT UA20161842
(43) Date of publication of application: 30.01.2019
(73) Proprietor: Intercom S.r.l., 50025 Montespertoli (Firenze) (IT)
(72) Inventor: GIUGNI, Luca, 50018 Scandicci (Firenze) (IT)
(74) Representative: Soldatini, Andrea
(86) International application number: PCT/IB2017/051485
(87) International publication number: WO 2017/163150

(56) References cited:
- EP-A2- 1 380 435
- DE-A1-102005 052 308
- DE-U1- 20 218 290

## Description

### Field of the invention

The present invention concerns the field of apparatuses for the application of adhesive, typically by spraying, in particular but not necessarily water-based glue, used mainly, but not exclusively for the production of footwear and leather products in general, but also in the paper industry. More specifically, its object is an apparatus for supporting and conveying equipped with a new automatic cleaning system and method.

### Background of the invention

The aforementioned apparatuses comprise spraying means that automatically or manually apply glue on the piece to be glued, for example and typically a footwear sole or upper, or details of bags and small leather items or even cardboard blanks. The spray means are arranged at a spraying station, and operate (in general supported by a suitable automatic movement system) on the pieces resting on a horizontal conveyor, and thus fed one after the other to the spraying station.

A problem that is frequently encountered in this type of machine is that of the glue that, being distributed by force also outside of the profile of the piece to be glued, progressively dirties the work plane, in general having the form of a mesh conveyor belt made of non-stick material (normally PTFE), dirtying also the pieces that are subsequently machined on the plane itself. Therefore, it is necessary to frequently stop and clean the conveyor, said cleaning moreover often being difficult and/or not fully effective.

DE-202 18 290-U1 discloses a device and a method for cleaning glue from a looped conveyor.

On other machines the pieces to be glued are supported by a disposable belt or filter, which is replaced after some working time. Also in this case the machine stop times and the replacement costs (materials and labour) have a great impact.

Furthermore, automatic systems have also been proposed that take advantage of grooved or in any case abrasive rollers, which try to remove the glue stuck on the conveyor with a mechanical rubbing or scraping action. Such systems have also proven to be not fully effective, due to the unsatisfactory quality of the cleaning, the wearing that they cause and the consequent occurrence of maintenance problems.

### Summary of the invention

The present invention has the object to solve the aforementioned problem, by providing a conveyor of the pieces for glue spraying apparatuses equipped with an automatic cleaning system that allows the belt to be kept clean effectively in a simple and cost-effective manner, both constructively and in terms of productivity, with a functional technical solution that is reliable and involves very little mechanical wearing of the conveyor itself.

This and other objects are accomplished by the conveyor with automatic cleaning system for glue distributing apparatuses according to the invention and by a relative method the essential characteristics of which are defined in the first and twelfth of the attached claims.

Further important characteristics are contained in the dependent claims.

### Brief description of the drawings

The characteristics and advantages of the conveyor with automatic cleaning system for glue distributing apparatuses and relative method according to the present invention will become apparent from the following description of embodiments thereof given as an example and not for limiting purposes with reference to the attached drawings, in which:
- figure 1 is a schematic view from above of a spraying apparatus equipped with a conveyor according to the invention;
- figure 2 is a side view of the apparatus of figure 1;
- figure 3 is an enlarged cross-section view of the area circled with III in figure 2, again with a schematic representation and with a variant as far as the elastic counteracting system of a cleaning roller is concerned;
- figure 4 is a front view of the apparatus of the previous figures, with parts in section for the sake of greater clarity of illustration;
- figure 5 is a front view analogous to that of figure 4, of an apparatus according to a different embodiment than the one shown in the previous figures.

### Detailed description of the invention

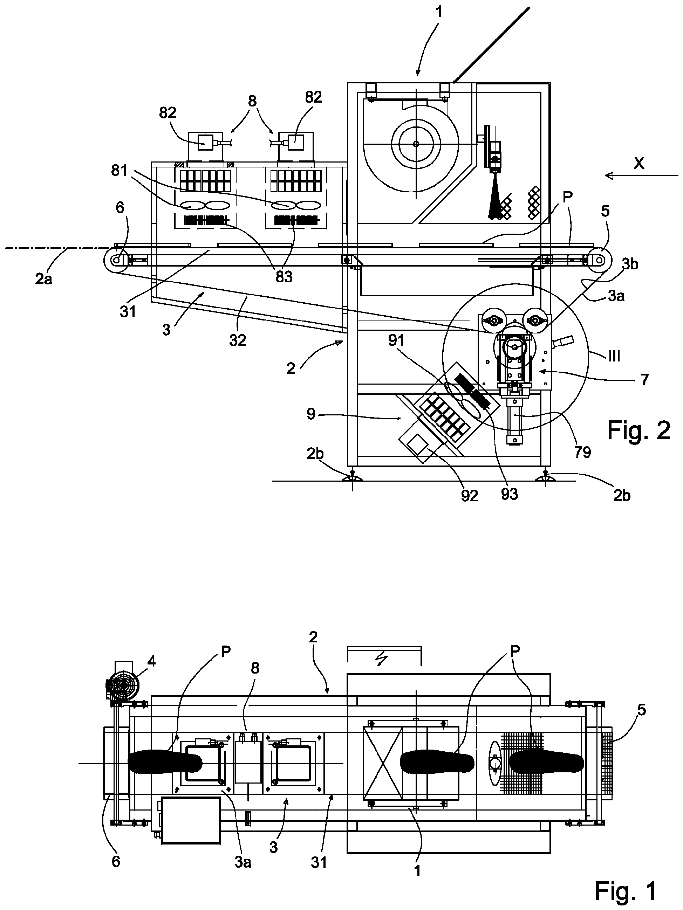

With reference to figures 1 to 4, the conveyor according to the invention is intended to feed pieces P that must be subjected to a glue spraying operation by spraying means, arranged at the top, indicated with 1 and not described in detail since they are, *per se*, entirely part of the prior art. The conveyor comprises a frame 2 intended to rest on the floor with feet 2b and has elongated extension in the direction corresponding to that in which the pieces to be machined are conveyed, said direction being indicated with X.

The frame 2 supports a continuous loop conveyor belt 3, having a horizontal upper run segment 31, corresponding to an advancing run along the direction X as indicated by the relative arrow, materializes with its outer face 3a a plane 2a which represents the actual conveying surface of the pieces. The spray means act on an intermediate area of the horizontal run segment along X in what can be defined as a glue distribution station. The structure of the belt is in general and preferably, but not necessarily, of the mesh type.

The belt 3 is supported, deviated and moved in the conventional manner, also in this case a detailed description being unnecessary and omitted, so as to further comprise a return run segment 32 at the lower part of the frame 2. In figure 1 it is possible to notice a motor 4 that through a first of two main deviation rollers of the belt, particularly in this case a second roller 6 at the end of the advancing run, transmits the necessary movement to the belt (a first main roller 5 positioned at the start of the advancing run being idle). The belt, also in this case conventionally, has at least one coating made of non-stick material such as PTFE or equivalent.

The main aspect of the invention lies in a cleaning group 7 of the belt arranged at the lower part of the frame so as to interfere with the return run of the belt itself. The group 7 comprises an idle cleaning roller 71, pulled tangentially by the belt and having an outer surface 71a on which the belt itself is forced (with its face 3a contaminated by the glue residues) due to the action of two fixed and idle pressure rollers 72 that engage in turn by tangential friction with the inner face 3b of the belt. Preferably, like in the example, the cleaning roller 71 has a central and lower position, with the two pressure rollers 72 that are arranged above the cleaning roller, symmetrically astride to it. Again preferably, according to an aspect that will be discussed hereinafter, the cleaning group is also arranged close to the first transmission roller 5, i.e. the one that marks the start of the advancing run.

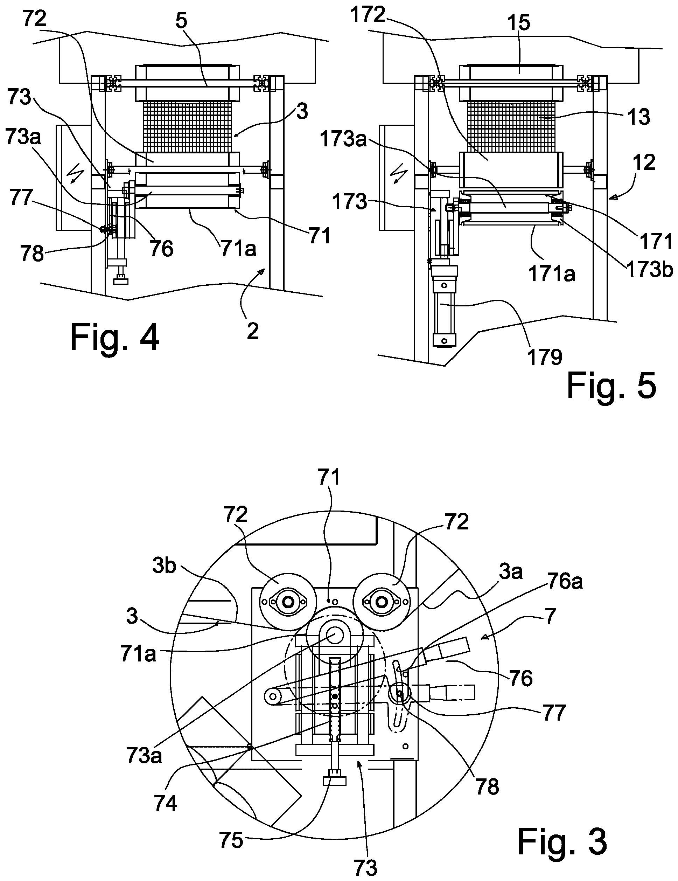

The cleaning roller 71 is preferably mounted canti-levered via a support 73 that allows a vertical excursion - or more generically closer to and away from the pressure rollers - of a pin 73a on which the body of the roller is rotatably and removably mounted. The vertical excursion away from the pressure rollers is counteracted by elastic means such as a spring 74 (variant of figure 3 and figure 4) which therefore urges the pushing of the cleaning roller towards the pressure rollers. The preload of the spring 74 can be calibrated by acting on a knob 75. Instead of the spring support it is possible to use equivalent solutions for example with the adoption of a pneumatic cylinder 79 (or 179), as shown in the variants depicted in figure 1 and in figure 5). It should also be noted how an equivalent alternative can be the mirroring one, i.e. using support means of the pressure rollers that allow a controlled movement away from the cleaning roller to assist the change in diameter of the latter following the accumulation of glue. In any case, the intensity of the pressure to be exerted, that in any case is a minor one (it may be sufficient to merely maintain the contact), can be easily optimised by those skilled in the art based on the specific circumstances (characteristics of the glue, environmental conditions, etc.).

In the "mechanical" solution, i.e. with the spring 74, an unlocking lever 76 is made use of, to allow a step of maximum and further distancing of the cleaning roller, or more precisely of the relative pin 73a, as will be seen shortly in order to assist the replacement of the roller itself. In particular, the lever 76 is rotatable about an axis parallel to that of rotation of the roller and takes up a raised operative position (figure 1 and the outline in continuous line in figure 3) in which, locked by means of a screw clamping knob 77, acts as a mechanical end stop for the vertical run of the pin 73a. By unscrewing the knob 77 the lever 76 can rotate downwards (see the outline in dashed line in figure 3), so as to allow a further lowering of the aforementioned pin. The knob 77 operates on a peg 78 that acts as a guide, through an arched slot 76a, for the movement of the lever 76. Different systems having equivalent functionality can be made use of, even more so in the pneumatic variant.

According to the invention, the cleaning roller 71 has a surface 71a intended to remove the glue residues from the belt and to hold them, accumulating them by means of a pure adhesion effect. For this purpose, according to a first embodiment the roller 71 has a rubber-like lining (for example made of a natural rubber with 45-50 Shore hardness) to assist the adhesion in particular of the first accumulated residues, where the successive residues instead form layers on the previously accumulated material. The fixed pressure rollers are, on the other hand, preferably coated with non-stick material to avoid collecting glue deposits that can incidentally be present also on the inner side of the mesh belt.

In order to assist the detachment of the glue from the belt and its cohesion with the cleaning roller, according to another aspect of the invention there are first heating means 8 (for example two or more devices in succession) arranged close to the belt, above it, in the vicinity of the second transmission roller 6 and thus adapted for streaming hot air over a final segment of the upper run segment. Preferably, second heating means 9 are also arranged on the return segment, contiguous to the cleaning group 7 and even more preferably adapted for streaming a jet of heating air over the belt precisely in the region of contact with the cleaning cylinder 71. The heating obtains a reactivation effect of the glue giving it the optimal consistency in order to be able to easily detach from the belt (detachment in any case assisted by the anti-stick nature thereof) and adhere to the cleaning roller. As an example, the heating flow can have a temperature comprised between 40°C and 60°C.

For this purpose, the presence of the second heating means 9 ensures that the temperature adapted for ensuring the optimal physical state of the glue in the collection step is maintained. Both the first and the second heating means preferably comprise ventilation devices, in which indeed fans 81, 91 moved by motors 82, 92 promote an air flow that is made hot by resistances 83, 93 and then hits the area of the belt and also the cleaning group (second means 9).

Therefore, the operation of the conveyor according to the invention is clear from what is explained above. Initially, the cleaning roller 71 has the primitive bulk determined by its surface 71a (continuous line in figure 3) and is in a position of maximum lifting, but as the glue stratifies on the outside thereof the bulk progressively increases, this being allowed and assisted by the compliance of the support 73.

The reaching of a maximum accumulation, and consequently a maximum permitted diameter as well as the maximum lowering of the pin 73a (the surface 71a of the roller in such a situation being that represented with a continuous segment of figure 2, which indeed marks a situation of maximum lowering, and with a dashed line in figure 3), will lead to a switch-off of the conveyor by reaching the end stop of the support (detected through a suitable sensor of obvious type). At that point the removal of the roller will take place, after displacement of the lever 76 (also here towards the position indicated in figure 3 with a dashed line), and consequently lowering of the pin 73a.

The roller (the locking in position of which on the pin relies on *per se* conventional reversible locking means) will be replaced with a brand new roller and meanwhile, while the conveyor is returned to operative state, easily removed of its collected glue "lining" in view of another use. For this purpose, the rubber surface can be coated in advance with a adhesive duct tape that whilst ensuring excellent adhesion for the glue also makes it easier to detach the aforementioned lining in this regeneration stop of the roller.

A second embodiment of the invention is shown in figure 5 which for parts identical or corresponding to those already described for the first embodiment is denoted by corresponding reference numerals (now in the hundreds). Without affecting the same structural and operative principle, the cleaning roller is in this case in the form of a simple disposable tube, for example a cardboard tube 171 locked at the ends through two tailstocks 173b idle on the pin 173a, and defining the surface 171a.

This is a disposable solution, with the tube (indeed preferably but not necessarily made of cardboard) that in a step prior to mounting (or in any case prior to operation) is coated on the surface 171a by spraying of a first glue lining that, when dried, already from the first rotations ensures the transfer of glue from the belt to the roller. In this case, in order to compensate for possible alignment errors, considering that the contribution to this compensation provided by the softness of the rubber surface of the cleaning roller according to the first embodiment, it will preferably be the pressure rollers 172 that are equipped with a rubber-like lining, e.g. a silicone rubber one.

The second embodiment therefore provides the possibility of avoiding the regeneration step of the cleaning roller, since the cardboard tube loaded with recovered glue is simply disposed of as waste. Depending on the circumstances, such a feature may be of interest and such as to make the solution in question preferable to that of the first embodiment.

In any case, it is surprising how the cleaning system proposed by the invention, despite its simplicity (which moreover represents a substantial advantage thereof), manages to ensure perfect cleaning of the conveyor belt, drastically reducing the production stops, the labor costs and spare parts costs (the belt in particular has a much longer useful life). The cleaning also takes place without significant increases in the normal mechanical friction, for which reason - as well as not causing anomalous wearing - the energy consumption is also not affected.

The present invention has been described up to here with reference to a preferred embodiment. It should be understood that there can be other embodiments within the scope of protection of the claims here attached.

## Claims

1. A conveyor for pieces intended to receive a distribution of glue, the conveyor comprising a continuous loop conveyor belt (3) developing on a frame (2) with an advancement run segment moving in an advancement direction (X), said segment defining, via an outer face (3a) of the belt (3), a piece transportation plane (2a) over which the pieces are adapted to receive the distribution of glue at a glue distribution station, and with a return run segment (32), the conveyor further comprising cleaning means (7) for cleaning the said outer face (3a) of the belt (3) from glue residues, associated with said return run segment and comprising at least one cleaning roller (71) supported with its rotation axis in a crosswise fashion with respect to said advancement direction (X) and provided with a roller outer face (71a) adapted to come into tangential contact with the belt outer face (3a), **characterized in that** said cleaning roller (71) is an idle roller, mounted in a replaceable fashion on said support frame (2) via a support (73) and brought into rotation by the belt through tangential friction, and by the fact that said cleaning means (7) further comprise pressure means (72) in turn supported by said support (73) and acting on a belt inner face and adapted to force the belt outer face (3a) against said at least one cleaning roller (71), the conveyor further comprising glue residue heating means (8, 9) arranged downstream of said glue distribution station and upstream of said cleaning means (7) to assist the transfer of the same residues from the belt to said cleaning roller outer face (71a), said support (73) of said at least one cleaning roller (71) and of said pressure means (72) being adapted to allow a variation of the mutual displacement thereof to assist the increase of width of the cleaning roller (71) occurring due to accumulation of the glue residues over said roller outer surface (71a).

2. The conveyor according to claim 1, wherein said outer surface (71a) of said at least one cleaning roller (71) is a smooth surface.

3. The conveyor according to claim 1 or 2, wherein said pressure means comprise at least one pressure roller (72) with a fixed axle brought into rotation by tangential friction with said belt, said support comprising a pivot (73a) for turnably supporting said cleaning roller (71), adapted to be displaced away from said at least one pressure roller (72) with a counteracting elastic force.

4. The conveyor according to claim 3, comprising a pair of pressure rollers (72) symmetrically arranged over a cleaning roller (71) at a central position.

5. The conveyor according to any of the previous claims, comprising control means provided with sensor means adapted to detect the reach of a limit glue accumulation over said cleaning roller (71), the control means being configured to stop motion of the belt in response to the such detection.

6. The conveyor according to any of the previous claims, wherein said heating means comprise at least first heating means (8) arranged close to said advancement run segment of the belt (3) and adapted to stream a heated air flow over at least a final portion of said segment.

7. The conveyor according to claim 7, wherein said heating means comprise second heating means (9) arranged close to said return run segment of the belt (3) and adapted to stream a heated air flow over the belt immediately upstream of said cleaning means (7) or at the region when the cleaning means come into contact with the belt.

8. The conveyor according to any of the claims from 3 to 7, wherein said cleaning roller (71) is a reusable roller with a rubber-like lining, e.g. made of a rubber with 45-50 Shore hardness, to assist adhesion in particular of the first glue residues to be accumulated.

9. The conveyor according to claim 8, wherein said at least one fixed pressure roller (72) is lined with a non-stick material.

10. The conveyor according to any of the claims from 3 to 7, wherein said cleaning roller comprises a disposable tube (171), e.g. made of cardboard, defining said roller outer surface (171a).

11. The conveyor according to claim 10, wherein said at least one pressure roller (172) is provided with a rubber lining, e.g. a silicone rubber lining.

12. A method for cleaning from glue residues a continuous loop belt that transports on an outer face (3a) pieces receiving a treatment of glue distribution at a glue distribution station, the method comprising: heating the glue residues on the belt downstream of said glue distribution station; pressing the outer face (3a) of the belt (3) in contact over an outer surface (71a) of at least one idle cleaning roller (71) driven by the same belt via tangential friction; adjusting the position of said cleaning roller and/or said belt assisting the increase of width of the cleaning roller (71) occurring due to accumulation of the glue residues over said roller outer surface (71a); stopping said belt and replacing said cleaning roller (71) when the glue accumulation has reached a predetermined limit level.

13. The method according to claim 12, wherein the glue residues are heated also immediately upstream of the cleaning by said cleaning roller (71) and/or at concurrently with said cleaning.

14. The method according to claim 12 or 13, wherein said outer surface (71a) of said at least one cleaning roller (71) is a smooth surface.

15. The method according to any of the claims from 12 to 14, wherein said cleaning roller (71) is a reusable roller with a rubber-like lining, e.g. made of a rubber with 45-50 Shore hardness, to assist adhesion in particular of the first glue residues to be accumulated.

16. The method according to any of the claims from 12 to 14, wherein said cleaning roller comprises a disposable tube (171), e.g. made of cardboard, defining said roller outer surface (171a), a glue lining being spread over said roller outer surface (171a) before starting operation.

## Patentansprüche

1. Förderer für Teile, die vorgesehen sind, um eine Verteilung von Kleber zu erhalten, wobei der Förderer eine kontinuierliche Förderbandschleife (3) enthält, die an einem Rahmen (2) mit einem Vorschublaufsegment, das sich in einer Vorschubrichtung (X) bewegt, wobei das Segment über eine äußere Seite (3a) des Bandes (3) eine Teil-Transportebene (2a) definiert, über der die Teile ausgelegt sind, um die Verteilung von Kleber an einer Kleberverteilstation zu erhalten, und mit einem Rückkehrlaufsegment (32) ausgebildet ist, wobei der Förderer ferner zum Reinigen der äußeren Seite (3a) des Bandes (3) von Kleberrückständen Reinigungseinrichtungen (7) enthält, die mit dem Rückkehrlaufsegment verbunden sind und wenigstens eine Reinigungswalze (71) enthält, die mit ihrer Drehachse in einer kreuzweisen Art bezüglich der Vorschubrichtung (X) abgestützt und mit einer Walzenaußenseite (71a) versehen ist, die ausgelegt ist, um in tangentialen Kontakt mit der Bandaußenseite (3a) zu kommen, wobei die Reinigungswalze (71) eine nichtangetriebene Walze ist, die in einer ersetzbaren an dem Halterahmen (2) über eine Halterung (73) montiert ist und von dem Band durch tangentiale Reibung in Drehung gebracht wird, und die Tatsache gegeben ist, dass die Reinigungseinrichtungen (7) ferner Druckeinrichtungen (72) enthalten, die wiederum von dem Halter (73) gehalten werden und auf eine Bandinnenseite wirken und ausgelegt sind, um die Bandaußenseite (3a) gegen die wenigstens eine Reinigungswalze (71) zu drücken, wobei der Förderer ferner Kleberrückstand-Heizeinrichtungen (8, 9) enthält, die stromabwärts der Kleberverteilstation und stromaufwärts der Reinigungseinrichtungen (7) angeordnet sind, um die Übertragung der selbigen Rückstände von dem Band auf die Reinigungswalzen-Außenseite (71a) zu unterstützen, wobei der Halter (73) der wenigstens einen Reinigungswalze (71) und die Druckeinrichtungen (72) ausgelegt sind, um eine Variation der wechselseitigen Versetzung davon zu gestatten, um die Zunahme der Breite der Reinigungswalze (71) zu unterstützen, die auf Grund des Ansammelns von Kleberresten über der Walzenaußenoberfläche (71a) auftritt.

2. Förderer nach Anspruch 1, wobei die Außenoberfläche (71a) der wenigstens einen Reinigungswalze (71) eine glatte Oberfläche ist.

3. Förderer nach Anspruch 1 oder 2, wobei die Druckeinrichtungen wenigstens eine Druckwalze (72) mit einer fixierten Achse ist, die durch tangentiale Reibung mit dem Band in Drehung gebracht wird, wobei die Halterung einen Zapfen (73a) zum drehbaren Halten der Reinigungswalze (71) enthält, der ausgelegt ist, um mit einer gegenwirkenden elastischen Kraft weg von der wenigstens einen Druckwalze (72) versetzt zu werden.

4. Förderer nach Anspruch 3, wobei ein Paar von Druckwalzen (72) enthalten ist, die symmetrisch über einer Reinigungswalze (71) in einer zentralen Position angeordnet sind.

5. Förderer nach einem der vorhergehenden Ansprüche, wobei Steuereinrichtungen enthalten sind, die mit Sensoreinrichtungen versehen sind, die ausgelegt sind, um das Erreichen einer begrenzten Kleberansammlung über der Reinigungswalze (71) zu detektieren, wobei die Steuereinrichtungen konfiguriert sind, um die Bewegung des Bandes in Abhängigkeit von einer solchen Detektion anzuhalten.

6. Förderer nach einem der vorhergehenden Ansprüche, wobei die Heizeinrichtungen wenigstens erste Heizeinrichtungen (8) enthalten, die nahe des Vorschublaufsegments des Bandes (3) angeordnet und ausgelegt sind, um einen erwärmten Luftstrom über wenigstens einen finalen Abschnitt des Segments strömen zu lassen.

7. Förderer nach Anspruch 6, wobei die Heizeinrichtungen zweite Heizeinrichtungen (9) enthalten, die nahe dem Rückkehrlaufsegment des Bandes (3) angeordnet und ausgelegt sind, um einen erwärmten Luftstrom über das Band unmittelbar stromaufwärts der Reinigungseinrichtungen (7) oder in der Region strömen zu lassen, wenn die Reinigungseinrichtungen in Kontakt mit dem Band kommen.

8. Förderer nach einem der Ansprüche 3 bis 7, wobei die Reinigungswalze (71) eine wiederverwendbare Walze mit einer gummiartigen Umkleidung ist, z.B. bestehend aus einem Gummi mit 45 - 50 Shore-Härte, um die Adhäsion insbesondere der ersten Kleberreste zu unterstützen, die aufgesammelt werden sollen.

9. Förderer nach Anspruch 8, wobei die wenigstens eine fixierte Druckwalze (72) mit einem nicht klebrigen Material umkleidet ist.

10. Förderer nach einem der Ansprüche 3 bis 7, wobei die Reinigungswalze ein z.B. aus Karton bestehendes wegwerfbares Rohr (171) enthält, das die Walzenaußenoberfläche (171a) definiert.

11. Förderer nach Anspruch 8, wobei die wenigstens eine Druckwalze (172) mit einer Gummiummantelung, z.B. einer Silikongummiummantelung versehen ist.

12. Verfahren zum Reinigen einer kontinuierlichen Bandschleife, die an einer Außenseite (3a) Teile transportiert, die eine Behandlung einer Kleberverteilung an einer Kleberverteilungsstation erhält, von Kleberrückständen, wobei das Verfahren enthält: Erwärmen der Kleberrückstände auf dem Band stromabwärts der Kleberverteilungsstation; Drücken der Außenseite (3a) des Bandes (3) in Kontakt über eine Außenoberfläche (71a) wenigstens einer nichtangetriebenen Reinigungswalze (71), die über dasselbe Band über tangentiale Reibung angetrieben wird; Einstellen der Position der Reinigungswalze und/oder des Bandes zum Unterstützen der Zunahme der Breite der Reinigungswalze (71), die aufgrund des Ansammelns von Kleberrückständen über der Walzenaußenoberfläche (71a) auftritt; Anhalten des Bandes und Ersetzen der Reinigungswalze (71), wenn die Kleberansammlung ein vorgegebenes Grenzlevel erreicht hat.

13. Verfahren nach Anspruch 12, wobei die Kleberrückstände auch unmittelbar stromaufwärts des Reinigens durch die Reinigungswalze (71) oder gleichzeitig mit dem Reinigen erwärmt werden.

14. Verfahren nach Anspruch 12 oder 13, wobei Außenoberfläche (71a) der wenigstens einen Reinigungswalze (71) eine glatte Oberfläche ist.

15. Verfahren nach einem der Ansprüche 12 bis 14, wobei die Reinigungswalze (71) eine wiederverwendbare Walze mit einer gummiartigen Umkleidung ist, z.B. bestehend aus einem Gummi mit 45 - 50 Shore-Härte, um die Adhäsion insbesondere der ersten Kleberreste zu unterstützen, die aufgesammelt werden sollen.

16. Verfahren nach einem der Ansprüche 12 bis 14, wobei die Reinigungswalze ein z.B. aus Karton bestehendes wegwerfbares Rohr (171) enthält, das die Walzenaußenoberfläche (171a) definiert, wobei eine Kleberummantelung über die Walzenaußenoberfläche (171a) vor dem Beginn des Betriebs gesprüht wird.

## Revendications

1. Un convoyeur de pièces destinées à recevoir une distribution de colle, le convoyeur comprenant une courroie transporteuse à boucle continue (3) se déplaçant sur un châssis (2) avec un segment de course d'avancement se déplaçant dans une direction d'avancement (X), ledit segment définissant, via une face externe (3a) de la courroie (3), un plan de transport de pièces (2a) sur lequel les pièces sont adaptées pour recevoir la distribution de colle au niveau d'un poste de distribution de colle, et avec un segment de course de retour (32), le convoyeur comprenant en outre des moyens de nettoyage (7) pour nettoyer ladite face externe (3a) de la courroie (3) des résidus de colle, associés audit segment de course de retour et comprenant au moins un rouleau de nettoyage (71) supporté par son axe de rotation de manière transversale par rapport à ladite direction d'avancement (X) et pourvu d'une surface extérieure de rouleau (71a) adaptée pour entrer en contact tangentiel avec la face externe de la courroie (3a), **caractérisé en ce que** ledit rouleau de nettoyage (71) est un rouleau à rotation libre, monté de façon à pouvoir être remplacé sur ledit châssis de support (2) via un support (73) et mis en rotation par la courroie par frottement tangentiel, et par le fait que lesdits moyens de nettoyage (7) comprennent en outre des moyens de pression (72) supportés à leur tour par ledit support (73) et agissant sur une face interne de la courroie et adapté pour forcer la face externe de la courroie (3a) contre ledit au moins un rouleau de nettoyage (71), le convoyeur comprenant en outre des moyens de chauffage (8, 9) des résidus de colle disposés en aval dudit poste de distribution de colle et en amont desdits moyens de nettoyage (7) pour aider au transfert de ces mêmes résidus, de la courroie vers ladite face extérieure (71a) du rouleau de nettoyage, ledit support (73) dudit au moins un rouleau de nettoyage (71) et desdits moyens de pression (72) étant adapté pour permettre une variation de leur déplacement mutuel afin de faciliter l'augmentation de l'épaisseur du rouleau de nettoyage (71) du fait de l'accumulation des résidus de colle sur ladite surface extérieure du rouleau (71a).

2. Le convoyeur selon la revendication 1, dans lequel ladite surface extérieure (71a) dudit au moins un rouleau de nettoyage (71) est une surface lisse.

3. Le convoyeur selon l'une des revendications 1 et 2, dans lequel lesdits moyens de pression comprennent au moins un rouleau de pression (72), avec un axe fixe, monté en rotation par frottement tangentiel avec ladite courroie, ledit support comprenant un pivot (73a) pour supporter en rotation ledit rouleau de nettoyage (71), adapté pour être éloigné dudit au moins un rouleau de pression (72) avec une force élastique antagoniste.

4. Le convoyeur selon la revendication 3, comprenant une paire de rouleaux de pression (72) disposés symétriquement au-dessus d'un rouleau de nettoyage (71) en une position centrale.

5. Le convoyeur selon l'une quelconque des revendications précédentes, comprenant des moyens de commande pourvus de moyens de capteur adaptés pour détecter la quantité limite d'une accumulation de colle sur ledit rouleau de nettoyage (71), les moyens de commande étant configurés pour arrêter le mouvement de la courroie en réponse à une telle détection.

6. Le convoyeur selon l'une quelconque des revendications précédentes, dans lequel lesdits moyens de chauffage comprennent au moins des premiers moyens de chauffage (8) agencés à proximité dudit segment de course d'avancement de la courroie (3) et adaptés pour faire passer un flux d'air chaud sur au moins une partie finale dudit segment.

7. Le convoyeur selon la revendication 7, dans lequel lesdits moyens de chauffage comprennent des deuxièmes moyens de chauffage (9) agencés à proximité dudit segment de course de retour de la courroie (3) et adaptés pour faire passer un flux d'air chaud sur la courroie immédiatement en amont desdits moyens de nettoyage (7) ou dans la région où les moyens de nettoyage entrent en contact avec la bande.

8. Le convoyeur selon l'une quelconque des revendications 3 à 7, dans lequel ledit rouleau de nettoyage (71) est un rouleau réutilisable avec un revêtement semblable à du caoutchouc, par exemple en caoutchouc de dureté 45-50 Shore, pour faciliter l'adhésion notamment des premiers résidus de colle à accumuler.

9. Le convoyeur selon la revendication 8, dans lequel ledit au moins un rouleau de pression fixe (72) est revêtu d'un matériau antiadhésif.

10. Le convoyeur selon l'une quelconque des revendications 3 à 7, dans lequel ledit rouleau de nettoyage comprend un tube jetable (171), par exemple en carton, définissant ladite surface extérieure du rouleau (171a).

11. Le convoyeur selon la revendication 10, dans lequel ledit au moins un rouleau de pression (172) est pourvu d'un revêtement de caoutchouc siliconé.

12. Un procédé pour enlever des résidus de colle sur une courroie à boucle continue qui transporte sur une face externe (3a) des pièces recevant un traitement de distribution de colle dans un poste de distribution de colle, le procédé consistant à :
• chauffer les résidus de colle sur la courroie en aval dudit poste de distribution de colle ;
• presser la face externe (3a) de la courroie (3) en contact sur une surface extérieure (71a) d'au moins un rouleau de nettoyage à rotation libre (71) entraîné par la même courroie via un frottement tangentiel ;
• ajuster la position dudit rouleau de nettoyage et/ou de ladite courroie en aidant l'augmentation de l'épaisseur du rouleau de nettoyage (71) due à une accumulation de résidus de colle sur la surface extérieure dudit rouleau (71a) ;
• arrêter ladite courroie et remplacer ledit rouleau de nettoyage (71) lorsque l'accumulation de colle a atteint un niveau limite prédéterminé.

13. Le proc édé selon la revendication 12, dans lequel les résidus de colle sont également immédiatement chauffés en amont du nettoyage par ledit rouleau de nettoyage (71) et/ou en même temps que ledit nettoyage.

14. Le procédé selon l'une des revendications 12 et 13, dans lequel ladite surface extérieure (71a) dudit au moins un rouleau de nettoyage (71) est une surface lisse.

15. Le procédé selon l'une quelconque des revendications 12 à 14, dans lequel ledit rouleau de nettoyage (71) est un rouleau réutilisable avec un revêtement en caoutchouc, par exemple en caoutchouc de dureté 45-50 Shore, pour faciliter l'adhésion notamment des premiers résidus de colle à accumuler.

16. Le procédé selon l'une quelconque des revendications 12 à 14, dans lequel ledit rouleau de nettoyage comprend un tube jetable (171), par exemple fait en carton, définissant ladite surface extérieure de rouleau (171a), une garniture de colle étant étalée sur ladite surface extérieure de rouleau (171a) avant le début du fonctionnement.
